# EUROPÄISCHE PATENTSCHRIFT

(11) **EP 2 222 532 B1**
(45) Veröffentlichungstag und Bekanntmachung des Hinweises auf die Patenterteilung: **29.03.2017**
(21) Anmeldenummer: 08851489.8
(22) Anmeldetag: 05.11.2008
(51) Int. Cl.: B62D 15/02

(54) **VERFAHREN UND VORRICHTUNG ZUR BAHNPLANUNG BEIM EINPARKEN EINES FAHRZEUGS**
METHOD AND DEVICE FOR PLANNING A PATH WHEN PARKING A VEHICLE
PROCÉDÉ ET DISPOSITIF DE PLANIFICATION DE TRAJECTOIRE LORS DE MANOEUVRES DE GARAGE D'UN VÉHICULE

(30) Priorität: 20.11.2007 DE 102007055391
(43) Veröffentlichungstag der Anmeldung: 01.09.2010
(73) Patentinhaber: Valeo Schalter und Sensoren GmbH, 74321 Bietigheim-Bissingen (DE)
(72) Erfinder: BARTH, Harald, 70825 Korntal-Münchingen (DE); JECKER, Nicolas, 74728 Esslingen (DE)
(86) Internationale Anmeldenummer: PCT/EP2008/009298
(87) Internationale Veröffentlichungsnummer: WO 2009/065494

(56) Entgegenhaltungen:
- WO-A-2006/069973
- DE-A1-102005 006 966
- DE-A1-102005 058 809

## Beschreibung

### Stand der Technik

Die Erfindung betrifft ein Verfahren zur Bahnplanung beim Einparken eines Fahrzeugs gemäß dem Oberbegriff des Anspruchs 1, eine Fahrerassistenzvorrichtung und ein Computerprogramm zur Durchführung des Verfahrens.

Bekannte Fahrassistenzvorrichtungen zur Unterstützung eines Fahrers eines Fahrzeugs beim Einparken, im Folgenden kurz als Einparksysteme bezeichnet, berechnen zu Beginn bzw. vor Beginn eines Einparkvorgangs eine Bahn für das Einparken des Fahrzeugs, bzw. eine Einparkbahn. Diese Bahn wird anhand der Geometrie einer Parklücke und einer Fahrzeugposition relativ zu dieser Parklücke berechnet. Weitere Eingangsgrößen werden dabei nicht berücksichtigt, was zu einem Widerspruch führt zwischen dem Wunsch nach einer möglichst frühen Startposition für das Einparken bzw. für den Einparkvorgang, verbunden mit einem kleinen ersten Bahnbogen, und einem möglichst komfortablen Einparkvorgang, verbunden mit einem geringen Lenkeinschlag und einem geringen seitlichen Ausscheren zur Gegenseite. Hieraus ergibt sich der weitere Nachteil einer Vorab-Festlegung unabhängig von einer Umgebungssituation, ob bei einer Bestimmung der Bahnparameter eine möglichst frühe Startposition, oder ein möglichst komfortabler Einparkvorgang höher gewichtet wird.

Es ist beispielsweise aus der DE 60 2004 002 224 T2 eine Einparkhilfseinrichtung zum Parken von Fahrzeugen bekannt, bei der Informationsdaten über Hindernisse oder Abstellflächenbegrenzungen mittels einer Kamera im hinteren Teil des Fahrzeugs ermittelt werden. Auf einer Anzeige im Fahrzeug wird dazu einem Bild der Umgebung hinter dem Fahrzeug ein über eine Bildauswertung ermittelter Parkraumrahmen überlagert. Eine Steuerung des Fahrzeugs wird über eine elektronische Parkassistenzsteuereinheit mit einer Steuerung der Lenk- Beschleunigungs- und Bremsvorgänge durchgeführt.

Es ist weiterhin beispielsweise aus der DE 10 2005 028 956 A1 ein Hilfssystem zum Parken von Fahrzeugen bekannt, bei dem Informationsdaten über Hindernisse oder Abstellflächenbegrenzungen mit Ultraschallsensoren an dem zu parkenden oder abzustellenden Fahrzeug gewonnen werden.

Aus der WO 2006/069973 A1 ist ein Verfahren zum Ermitteln der Befahrbarkeit einer Parklücke ausgehend von der Ausgangsstellung eines Fahrzeugs bekannt. Ziel dieses Verfahrens ist es, zu ermitteln, ob ein Fahrzeug ausgehend von einer Ausgangsstellung überhaupt in eine zuvor vermessene Parklücke eingeparkt werden kann. Die Befahrbarkeit der Parklücke wird dabei anhand von zwei Kennfeldern ermittelt, die für mehrere Sätze von ersten Fahrzeuggrößen einen Minimal- und einen Maximalwert für eine zweite Fahrzeuggröße angeben. Die Fahrzeuggrößen umfassen dabei einen longitudinalen und lateralen Abstand des Fahrzeugs von der Parklücke, einen Gierwinkel sowie einen Lenkwinkel an lenkbaren Rädern des Fahrzeugs.

Aus der DE 10 2005 058 809 A1 ist ein Verfahren zur Planung einer Einparkbahn eines Fahrzeugs bekannt, die aus einer Anzahl elementarer Bahnlinien zusammengesetzt ist. Diese elementaren Bahnlinien können zwei Klothoiden sowie eine Gerade und/oder einen Kreisbogen umfassen. Die Einparkbahn wird dabei anhand der Geometrie der Parklücke und der Startposition des Fahrzeugs berechnet.

Aus der DE 10 2005 006 966 A1 ist eine gattungsgemäße Einparkhilfe für ein Fahrzeug bekannt, welche ein Fahrzeug autonom oder semi-autonom entlang einer Einparkbahn in eine Parklücke einparkt. Die Einparkbahn wird dabei anhand der Geometrie der Parklücke und der Fahrzeugposition relativ zu Lücke berechnet und umfasst einen ersten Bahnbogen, der eine Anfahrbahn bildet, sowie einen kreis¬förmigen zweiten Bahnbogen, der eine Einfahrbahn im Bereich der Parklü cke bildet. Um den Berechnungsaufwand bei der Bahnplanung zu verringern wird vorgeschlagen, die Einparkbahn entsprechend der Geometrie der Parklücke derart zu skalieren, dass die Bahn durch Streckung einer für eine minimalen Parklücke berechneten Bahn ermittelt wird.

### Offenbarung der Erfindung

Die Erfindung geht von einem Verfahren zur Bahnplanung beim Einparken eines Fahrzeugs aus, bei dem eine einen ersten und einen zweiten Bahnbogen umfassende Bahn anhand der Geometrie einer Parklücke und einer Fahrzeugposition relativ zu dieser Parklücke berechnet wird, wobei es als eine Aufgabe der Erfindung angesehen wird, das Verfahren zur Bahnplanung derart weiterzuentwickeln, das zusätzliche Eingangsgrößen berücksichtigt werden können, um die Einparkbahn der Situation noch besser anpassen und Widersprüche zwischen verschiedenen Ansprüchen besser auflösen zu können.

Die Nachteile des Standes der Technik werden bei einem erfindungsgemäßen Verfahren zur Bahnplanung beim Einparken eines Fahrzeugs dadurch vermieden, dass in vorteilhafter Weise die Bahn für das Einparken des Fahrzeugs zuerst mit einem kleinsten sinnvollen ersten Bahnbogen berechnet wird, und dann mit einem möglichen größeren ersten Bahnbogen berechnet wird.

Da die Krümmung des ersten Bahnbogens direkt die Lage einer Startposition in Längsrichtung für das seitliche Einparken beeinflusst, wird durch Berechnung des kleinsten sinnvollen ersten Bahnbogens ein frühestmögliches Erreichen der Startposition erzielt.

Hält der Fahrer das Fahrzeug in Längsrichtung später an, wird die Bahn in Abhängigkeit von einer tatsächlichen Anhalteposition des Fahrzeugs mit einem dann möglichen größeren ersten Bahnbogen neu berechnet. Dabei findet ein Einparkvorgang des Fahrzeugs dann entlang der Bahn mit dem größeren möglichen ersten Bahnbogen statt. Dadurch wird erreicht, dass der Einparkvorgang einen geringeren Lenkeinschlag erfordert und das Fahrzeug insbe sondere beim Rückwärtsfahren weniger zur Seite ausschwenkt und so der Einparkvorgang für den Fahrer komfortabler abläuft.

Die Erfindung erlaubt somit in besonders vorteilhafter Weise die Ermittlung einer möglichst optimalen Bahn für das Einparken eines Fahrzeuges in eine Parklücke.

Die Erfindung ist insbesondere in Verbindung mit einer Fahrassistenzvorrichtung zur Unterstützung eines Fahrers eines Fahrzeuges beim Einparken in eine Parklücke vorteilhaft anwendbar. Eine solche Fahrassistenzvorrichtung umfasst vorzugsweise Mittel zur Erfassung einer Parklücke sowie einer Startposition eines Einparkvorgangs relativ zu dieser Parklücke, sowie einen mit den Mitteln verbundenen Mikroprozessor mit zugehörigen Speichermitteln zur Berechnung einer einen ersten und einen zweiten Bahnbogen umfassende Bahn zunächst mit einem kleinsten sinnvollen ersten Bahnbogen der Bahn und in Abhängigkeit von einer tatsächlichen Anhalteposition des Fahrzeugs anschließend mit einem möglichen größeren ersten Bahnbogen der Bahn.

Eine vorteilhafte Anwendung des erfindungsgemäßen Verfahrens ergibt sich in Verbindung mit einer Fahrassistenzvorrichtung, welche ein geführtes Einparken oder ein halbautomatisches Einparken, oder ein vollautomatisches Einparken ermöglicht.

Eine besonders vorteilhaften Ausgestaltung der Erfindung betrifft ein Computerprogrammprodukt gespeichert auf einem computerverwendbaren Medium, umfassend computerlesbare Programmittel, welche bei Ausführung des Computerprogrammprodukts auf einem Mikroprozessor mit zugehörigen Speichermitteln oder auf einem Computer diesen zur Durchführung eines oben beschriebenen, erfindungsgemäßen Verfahrens veranlassen.

### Kurze Beschreibung der Zeichnung

Die Erfindung wird nachfolgend anhand der Figuren Zeichnung erläutert. Dabei zeigen:
- Figur 1: eine schematische Darstellung eines einzügigen Einparkvorgangs mit kleinstem sinnvollen ersten Bahnbogen in eine seitliche Parklücke und
- Figur 2: eine schematische Darstellung eines einzügigen Einparkvorgangs mit möglichem größeren ersten Bahnbogen in eine seitliche Parklücke.

### Wege zur Ausführung der Erfindung

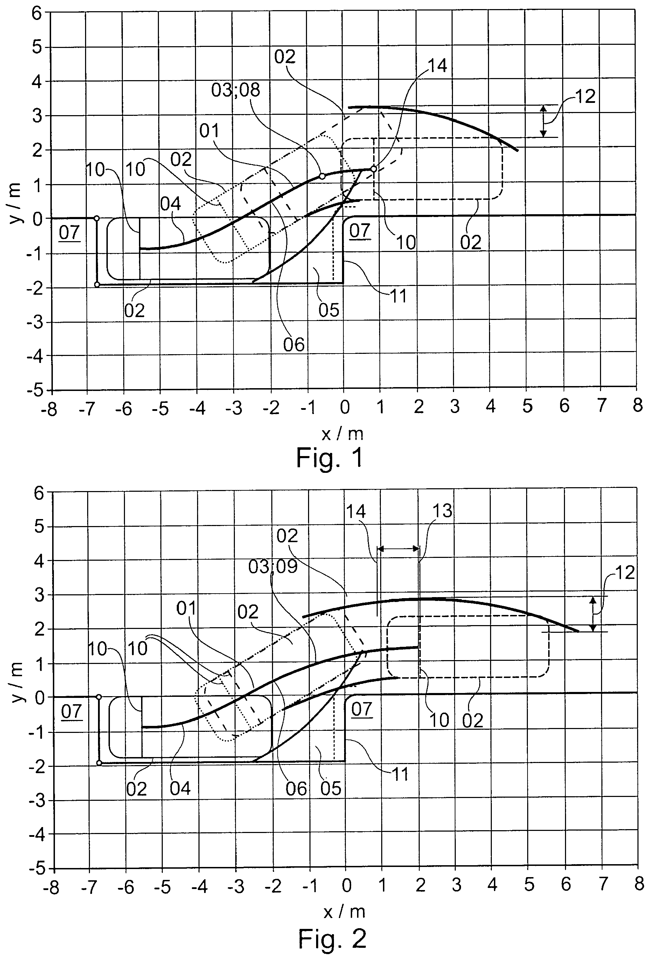

Eine in den Figuren 1 und 2 dargestellte Bahn 01 für das Einparken eines Fahrzeugs 02 in eine seitliche Parklücke 05 setzt sich bei einem dargestellten einzügigen Einparkvorgang aus einem ersten Bahnbogen 03, einem zweiten Bahnbogen 04 und einem dazwischen liegenden, auch als gerade Schrägphase bezeichneten geraden Abschnitt 06 zusammen. Die seitliche Parklücke 05 wird beispielsweise durch am Straßenrand geparkte, nicht näher dargestellte, Fahrzeuge 07 begrenzt. Der seitliche Abstand zwischen dem parkenden Fahrzeug 02 und den geparkten Fahrzeugen 07 beträgt im Ausführungsbeispiel 0,5 m. Die Schrägstellung des Fahrzeugs beim Einparkvorgang ist dabei in Figur 1 und 2 identisch, ebenso der Radius bzw. die Krümmung des zweiten Bahnbogens 04.

Beim Erfassen der Parklücke 05 durch geeignete Umgebungssensoren, beispielsweise Ultraschallsensoren an der Fahrzeugfront, am Fahrzeugheck und gegebenenfalls an der Seite des Fahrzeugs 02, und beispielsweise unterhalb eines vorgebbaren Schwellenwerts für die Fahrzeuggeschwindigkeit, berechnet eine das erfindungsgemäße Verfahren durchführende, über geeignete Mittel zur Ausführung des Verfahrens verfügende im Fahrzeug 02 verbaute Fahrassistenzvorrichtung zunächst den in Figur 1 dargestellten kleinsten sinnvollen ersten Bahnbogen 08 der Bahn 01. Der kleinste sinnvolle Bahnbogen 08 ist beispielsweise durch den maximalen Lenkeinschlag sowie die Abmessungen des Fahrzeugs 02 begrenzt. Wie in Figur 1 dargestellt, ergibt sich im Ausführungsbeispiel ein kleinster erster Bahnbogen 08 mit einem Radius von 4,8 m, der nahezu einem Volleinschlag entspricht, eine einer frühest möglichen Anhalteposition 14 entsprechende Startposition 14 mit einem Abstand der Hinterachse 10 des Fahrzeugs 02 zum Ende 11 der Parklücke 05 von 0,83 m, sowie eine Ausscherweite 12 von 0,87 m. Da die Krümmung des ersten Bahnbogens 03 direkt die Lage einer Startposition in Längsrichtung für das seitliche Einparken beeinflusst, wird durch Berechnung des kleinsten sinnvollen ersten Bahnbogens 08 erreicht, dass die Startposition 14 frühestmöglich erreicht wird.

Vorzugsweise in Abhängigkeit von der in Figur 2 dargestellten tatsächlichen Anhalteposition 13 des Fahrzeugs 02 wird dann ein möglicher größerer erster Bahnbogen 09 berechnet. Vorzugsweise verläuft der Einparkvorgang anschließend entlang der Bahn 01 mit dem möglichen größeren ersten Bahnbogen 09. Dadurch wird erreicht, dass der Einparkvorgang einen geringeren Lenkeinschlag erfordert und das Fahrzeug 02 insbesondere beim Rückwärtsfahren weniger zur Seite ausschwenkt und so der Einparkvorgang für den Fahrer komfortabler abläuft. Wie in Figur 2 dargestellt, ergibt sich im Ausführungsbeispiel ein möglicher größerer erster Bahnbogen 09 mit einem Radius von 9,0 m, der einen geringen Lenkeinschlag erfordert, eine der tatsächlichen, bzw. im Vergleich zur frühest möglichen Anhalteposition 14 (Figur 1) späteren Anhalteposition 13 entsprechende Startposition 13 mit einem Abstand der Hinterachse 10 des Fahrzeugs 02 zum Ende 11 der Parklücke 05 von 2,04 m, sowie eine Ausscherweite 12 von 0,48 m.

Die Erfindung erlaubt somit die Ermittlung einer möglichst optimalen Bahn 01 für das Einparken eines Fahrzeuges 02 in eine Parklücke 05.

## Patentansprüche

1. Verfahren zur Bahnplanung beim Einparken eines Fahrzeugs (02), bei dem eine einen ersten und einen zweiten Bahnbogen (03; 04) umfassende Bahn (01) anhand der Geometrie einer Parklücke (05) und einer Fahrzeugposition relativ zu dieser Parklücke (05) berechnet wird, wobei zum Erreichen einer frühestmöglichen Startposition zunächst ein kleinster sinnvoller erster Bahnbogen (08) der Bahn (01) berechnet wird, der nahezu einem Volleinschlag der Lenkung entspricht, **dadurch gekennzeichnet, dass** anschließend in Abhängigkeit von einer tatsächlichen Anhalteposition (13) des Fahrzeugs (02) ein möglicher größerer erster Bahnbogen (09) der Bahn (01) berechnet wird, der einen geringeren Lenkeinschlag erfordert, wobei ein Einparkvorgang des Fahrzeugs (02) entlang der Bahn (01) mit dem größeren möglichen ersten Bahnbogen (09) durchgeführt wird.

2. Fahrassistenzvorrichtung zur Durchführung eines Verfahrens nach Anspruch 1, **gekennzeichnet durch** Mittel zur Erfassung einer Parklücke sowie einer Startposition eines Einparkvorgangs relativ zu dieser Parklücke (05), sowie einen mit den Mitteln verbundenen Mikroprozessor mit zugehörigen Speichermitteln zur Berechnung einer einen ersten und einen zweiten Bahnbogen (03; 04) umfassende Bahn (01) zunächst mit einem kleinsten sinnvollen ersten Bahnbogen (08) der Bahn (01) und in Abhängigkeit von einer tatsächlichen Anhalteposition (13) des Fahrzeugs (02) anschließend mit einem möglichen größeren ersten Bahnbogen (09) der Bahn (01).

3. Fahrassistenzvorrichtung nach Anspruch 2, **dadurch gekennzeichnet, dass** die Fahrassistenzvorrichtung ein geführtes Einparken oder ein halbautomatisches Einparken, oder ein vollautomatisches Einparken ermöglicht.

4. Computerprogrammprodukt gespeichert auf einem computerverwendbaren Medium, umfassend computerlesbare Programmittel, welche bei Ausführung des Computerprogrammprodukts auf einem Mikroprozessor mit zugehörigen Speichermitteln oder auf einem Computer diesen zur Durchführung eines Verfahrens nach Anspruch 1 veranlassen.

## Claims

1. Method for planning a path when parking a vehicle (02), in which a path (01) which comprises a first and second path arc (03; 04) is calculated on the basis of the geometry of a parking space (05) and a vehicle position relative to this parking space (05), wherein in order to reach the earliest possible starting position at first a minimum appropriate first path arc (08) of the path (01) which corresponds to virtually a full steering lock of the steering is calculated, **characterized in that** subsequently as a function of an actual stopping position (13) of the vehicle (02), a possible larger first path arc (09) of the path (01) which requires a smaller steering lock is calculated wherein a parking process of the vehicle (02) along the path (01) is carried out with the larger possible first path arc (09).

2. Driving assistance device for carrying out a method according to Claim 1, **characterized by** means for detecting a parking space and a starting position of a parking process relative to this parking space (05), and a microprocessor which is connected to the means and has associated storage means for calculating a path (01) which comprises a first and second path arc (03; 04) at first with a minimum appropriate first path arc (08) of the path (01) and subsequently with a possible larger first path arc (09) of the path (01) as a function of an actual stopping position (13) of the vehicle (02).

3. Driving assistance device according to Claim 2, **characterized in that** the driving assistance device permits guided parking or semi-automatic parking, or fully automatic parking.

4. Computer program product stored on a computer-useable medium, comprising computer-readable programming means which, when the computer program product is executed on a microprocessor with associated storage means or on a computer, cause the latter to carry out a method according to Claim 1.

## Revendications

1. Procédé de planification de trajectoire lors de manoeuvres de stationnement d'un véhicule (02), selon lequel une trajectoire (01), comprenant un premier et un second arc de trajectoire (03 ; 04), est calculée à partir de la géométrie d'un emplacement de stationnement (05) et d'une position du véhicule par rapport audit emplacement de stationnement (05), dans lequel un premier arc de trajectoire utile le plus petit (08) de la trajectoire (01) est tout d'abord calculé pour obtenir une position de départ le plus tôt possible, lequel arc de trajectoire correspond pratiquement à un braquage en butée, **caractérisé en ce qu'**un premier arc de trajectoire le plus grand possible (09) de la trajectoire (01) est calculé en fonction d'une position d'arrêt réelle (13) du véhicule (02), lequel arc de trajectoire conduit à un plus faible angle de braquage, dans lequel un processus de stationnement du véhicule (02) est réalisé le long de la trajectoire (01) avec le premier arc de trajectoire (09) le plus grand possible.

2. Procédé d'aide à la conduite destiné à mettre en oeuvre un procédé selon la revendication 1, **caractérisé par** des moyens destinés à détecter un emplacement de stationnement ainsi qu'une position de départ d'un processus de stationnement par rapport audit emplacement de stationnement (05), et comportant également un microprocesseur connecté auxdits moyens comprenant des moyens de stockage associés pour calculer tout d'abord une trajectoire (01) comprenant un premier et un second arc de trajectoire (03 ; 04) avec un premier arc de trajectoire (08) utile le plus petit de la trajectoire (01) et ensuite en fonction d'une position d'arrêt réelle (13) du véhicule (02) avec un premier arc de trajectoire (09) le plus grand possible de la trajectoire (01).

3. Procédé d'aide à la conduite selon la revendication 2, **caractérisé en ce que** le dispositif d'aide à la conduite permet un stationnement guidé ou un stationnement semi-automatique ou un stationnement entièrement automatique.

4. Produit de programme informatique stocké sur un support lisible par ordinateur, comprenant des moyens à programmes lisibles par un ordinateur qui, lors de l'exécution du produit de programme informatique sur un microprocesseur comportant des moyens de stockage associés ou sur un ordinateur, conduisent à la mise en oeuvre d'un procédé selon la revendication 1.
